(19) Europäisches Patentamt
European Patent Office
Office européen des brevets

(11) **EP 3 675 397 A1**

(12) **EUROPEAN PATENT APPLICATION**

(43) Date of publication:
**01.07.2020 Bulletin 2020/27**

(51) Int Cl.:
***H04J 13/00*** *(2011.01)*     ***H04W 52/04*** *(2009.01)*

(21) Application number: **19171611.7**

(22) Date of filing: **29.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 EP 18248260**
               **08.04.2019 EP 19167902**

(71) Applicant: **IHP GmbH - Innovations for High Performance Microelectronics / Leibniz-Institut für innovative Mikroelektronik**
**15236 Frankfurt (Oder) (DE)**

(72) Inventors:
• **WIMMER, Lara**
  **15234 Frankfurt (Oder) (DE)**
• **KRISHNEGOWDA, Karthik**
  **15234 Frankfurt (Oder) (DE)**
• **METHFESSEL, Michael**
  **15230 Frankfurt (Oder) (DE)**
• **KRAEMER, Rolf**
  **15517 Fürstenwalde (DE)**

(74) Representative: **Eisenführ Speiser Patentanwälte Rechtsanwälte PartGmbB Anna-Louisa-Karsch-Strasse 2 10178 Berlin (DE)**

(54) **PSSS RADIO COMMUNICATION TECHNOLOGY FOR HIGH DATA RATES**

(57) The use of a particular structure of payload data vectors and resulting PSSS payload data symbols on a radio transmitter side involves including in at least one of the payload data vectors, in addition to the respective fraction of the payload data, a guard section formed by a pilot value embedded between two multiple-repetition sequences of a reference value. This allows a particularly simple method of channel estimation and an equally simple method of channel correction, which do not require use of a preamble for these purposes.

FIG. 7

**Description**

FIELD OF THE INVENTION

The present invention is in the field of radio communication using a Parallel Sequence Spread Spectrum (PSSS) technology. More specifically, the invention relates to a method for operating a radio transmitter in transmitting payload data, to a method for operating a radio receiver in performing channel estimation for decoding encoded payload data symbols received from a radio transmitter, and to a method for operating a radio receiver in performing channel correction for decoding encoded payload data symbols received from a radio transmitter. The invention also relates to a radio transmitter and to a radio receiver.

DESCRIPTION OF PRIOR ART

The publication WO 2016/086916 A1 describes a method for transmitting payload data vectors by means of Parallel Sequence Spread Spectrum (PSSS). A duplex operation with simultaneous transmission and reception of payload data symbols is made possible by using PSSS coded symbols.
The Parallel Sequence Spread Spectrum (PSSS) coding scheme is a modulation scheme on the physical layer that forms a part of the IEEE 802.14.5 wireless personal area network (WPAN) standard and of the Zigbee standard. PSSS is based on direct-sequence spread spectrum technology in conjunction with orthogonal code division multiplexing. Hence, a given bit of payload data is spread by a respective codeword, modulated and sent via the radio communication channel, received on the receiver side, demodulated and de-spread to a single pulse. PSSS uses a Code Division Multiple Access (CDMA) concept, allowing radio transmitters sending their PSSS payload data symbols in parallel, using a superposition of orthogonal codewords formed by cyclically shifted maximal-length sequences, which are also referred to as m-sequences. In addition, a cyclix prefix in the sent payload data symbols includes a repetition of the end of the respective same payload data symbols.
PSSS has been recognized for combining advantages of code spreading with a capability to achieve a low latency and higher data rates. For these reasons, radio communication systems using PSSS are currently also considered for use in industrial manufacturing control applications. However, for replacing legacy cable-based communication in a manufacturing cell, a radio communication system allowing a particularly high maximum data rate is required, to enable a parallel control of a large number of devices.

DISCLOSURE OF THE INVENTION AND ITS EMBODIMENTS

It would therefore be desirable to provide a PSSS radio communication technology that allows achieving a particularly high data rate, i.e., a particularly high amount of payload data that can be transmitted in a given time span.
It would also be desirable to provide a PSSS radio communication technology that does not require the use of a preamble for the purpose of channel estimation and channel correction on the receiver side.

Method for Operating a Radio Transmitter

According to a first aspect of the present invention, a method for operating a radio transmitter in transmitting payload data via a radio channel of a radio communication system is provided in accordance with claim 1. The method comprises:

-    forming payload data vectors of a predetermined length, each including a respective fraction of payload data to be transmitted;

-    including in at least one of the payload data vectors, in addition to the respective fraction of the payload data, a guard section formed by a pilot value embedded between two multiple-repetition sequences of a reference value;

-    encoding the payload data vectors to generate payload data symbols as encoded coefficient vectors, by determining respective products of the respective payload data vectors and a code matrix of mutually orthogonal codewords of a cyclic code, using a Parallel Sequence Spread Spectrum coding scheme, wherein the pilot value is encoded as a pilot code by a predetermined channel-estimation codeword of the cyclic code.

The method of the first aspect of the present invention allows continuously transmitting payload data in a sequence of payload data symbols. This can be achieved with the method of the first aspect by occasionally providing a guard section in the payload data vectors to be encoded using PSSS, for allowing channel estimation on the receiver side. The guard section in such vectors of payload data to be transmitted is formed by a pilot value embedded between two multiple-repetition sequences of a reference value. This way, PSSS pay-load data symbols are formed and transmitted, which in addition to a respective fraction of encoded payload data to be transmitted contain the guard section in encoded form. Such PSSS payload data symbols include a smaller fraction of payload data than other transmitted PSSS payload data symbols that contain only payload data and no guard section.

It is noted in this context that the encoding of the payload data vectors in the context of the method of the invention, which has been described above by "determining respective products of the respective payload data vectors and a code matrix of mutually orthogonal codewords of a cyclic code", is not meant to be interpreted in a limited literal way. It is in fact not a requirement according to the present invention to actually calculate the respective products of the respective payload data vectors and a code matrix. In particular, the method need not involve any handling of a code matrix on the transmitter side. The determination of the respective products can be performed in other ways, in particular in simpler ways, for instance by determining respective linear combinations of the coefficients of given pay-load data vectors using respective codewords of the cyclic code.

As will be explained further below in the context of the method of the second aspect, this particular structure of the guard section encoded within the payload data symbol to be transmitted, allows a receiver to perform channel estimation without interruption of the reception of the payload data. In particular, the method of the first aspect advantageously allows avoiding the generation and transmission of separate preamble symbols by the radio transmitter to support channel estimation on the receiver side, which would interrupt the transmission of payload data symbols. Thus, by embedding the encoded guard section in the payload data symbols, such interruption is avoided and a particularly high data rate can be achieved.

As will become clear in the context of the description of other aspects of the invention further below, the use of the particular structure of the payload data vectors and the resulting PSSS payload data symbols on the radio transmitter side has the further advantage of also allowing a particularly simple method of channel estimation and an equally simple method of channel correction. This additional advantage can be achieved in the downlink direction, i.e., in radio communication from a master to one or more slaves of a radio communication system, as well as in the uplink direction, i.e., in radio communication from a plurality of slaves to a master.

Furthermore, another advantage of the method is that the number of symbols comprising the guard sequence can be varied, allowing a receiver renewing the channel estimation of dynamic channels as often as required.

In the following, embodiments of the method of the first aspect will be described.

The multiple-repetition sequences of the reference value in the guard interval allow the receiver determining multipath propagation contributions. Suitably, the reference value used in the guard interval is zero. This allows a particularly simple channel estimation process on the receiver side. However, other reference values could be used, depending also on the modulation scheme applied.

Regarding the length of the guard section, i.e., of the multiple-repetition sequences of the reference value, it is noted that for channel estimation only a few repetitions of the reference value are typically required. An initial number can be estimated from a given geometry of the radio communication system setup, the speed of light and from a chip duration. Typical examples of a suitable length of the multiple-repetition sequences are between 3 and 20, more suitably between 5 and 10. For chip durations in today's usual range of 20 - 50 ns, no more than 5 codes before and 5 codes after the pilot value are typically required. In view of the cyclic properties of the coding scheme, the length of the multiple-repetition sequences on both sides of the pilot value is preferably equal. However, it is also possible without much disadvantage in decoding to use different lengths of the multiple-repetition sequences on both sides of the pilot value.

For allowing improved channel estimation performance on the receiver side, an embodiment of the method of the first aspect modifies the transmission of the generated payload data symbols via the radio channel. In particular, according to this embodiment, transmitting those payload data symbols, which include the encoded guard section, comprises selectively transmitting the pilot code with a radio power amount that is higher than that used for transmitting the respective fraction of the encoded payload data. This way, the pilot code can be received with a particularly high signal-to-noise ratio, thus improving channel estimation and channel correction performance on the receiver side.

In other embodiments comprising the transmission of the generated payload data symbols via the radio channel, the method additionally comprises the transmitter ascertaining information on the current channel quality.

In some variants of this group of embodiments, the embodiment comprises ascertaining channel-quality information in the form of a feedback provided by the radio receiver to which the transmitted payload data symbols are directed. The feedback is suitably provided in accordance with higher layers of a communication protocol used in the radio communication between the radio transmitter and the radio transceiver. For instance, the feedback is indicative of an error rate of receiving the payload data symbols by a radio receiver, as determined by the radio receiver. Different suitable quantities indicative of error rate information are known per se, such as a bit error rate (BER), which indicates a number of bit errors per unit time, a packet error rate (PER), a frame error rate (FER), or a signal-to-noise ratio (SNR).

In a particularly advantageous variant, the channel-quality information provided by the radio receiver is indicative a channel estimation kernel that has been determined by the radio receiver using the guard section transmitted by the radio transmitter. In a modification of this variant, an average of a number of recently determined channel estimation kernels is used.

In another example, the feedback ascertained by the radio transmitter is provided by the radio receiver in the form of a negative acknowledgement (NACK) response to transmitted payload data symbols, indicating a rejection of one or more transmitted payload data symbols by the receiver, typically due to an error detected by the receiver. For instance, the radio transmitter may ascertain the channel-quality information by calculating a ratio of positive acknowledgement (ACK) responses and negative acknowledgement (NACK) responses received from a given radio receiver within a predefined time span.

Some of these embodiments, which involve ascertaining channel-quality information, additionally comprise

- dynamically adapting at least one of the following quantities in dependence on the channel-quality information:

  - a relative frequency of those payload data symbols, which include the encoded guard section;

  - a number of repetitions of the reference value in the multiple-repetition sequences; and

  - an amount of an increase of a radio power to be used for transmitting the pilot code, in comparison with a radio power amount to be used for transmitting the respective fraction of the encoded payload data of a given payload data symbol.

By dynamically adapting, in response to the channel-quality information ascertained, a relative frequency of those payload data symbols, which include the encoded guard section, the receiver is enabled to update the channel estimation after shorter time intervals, which in turn allows improving the accuracy of channel correction by the receiver, thus reducing the error rate.

By dynamically adapting, in response to the channel-quality information ascertained, a number of repetitions of the reference value in the multiple-repetition sequences, the transmitter is enabled to dynamically respond to current multipath propagation perturbation of the radio channel. This is particularly useful where the radio channel is established under relative motion between the radio transmitter and/or the radio receiver, or in an environment comprising moving objects causing an environment with dynamically changing multipath propagation perturbation.

Furthermore, as explained before, dynamically adapting an amount of an increase of the radio power to be used for transmitting the pilot code, in comparison with a radio power amount to be used for transmitting the respective fraction of the encoded payload data of a given payload data symbol, also allows improving the accuracy of the channel estimation and thus channel correction on the receiver side.

In a further embodiment forming the data vectors for transmission via an uplink radio channel of the radio communication system comprises

- filling only a transmitter-specific data vector section of the payload data vectors, which is assigned unambiguously in the radio communication system only to the given radio transmitter, with the guard section and with the fraction of payload data that is to be encoded in the respective payload data symbol, and

- filling any remaining section of the data vectors with the reference value.

The reference value in these and other embodiments described herein is suitably and preferably zero (0).

As mentioned before, the method of the first aspect of the invention is suitable for application in both the downlink direction and the uplink direction. This distinction is particularly important in radio communication systems implementing a star topology, having one radio transceiver taking the role of a master and a plurality of radio transceivers taking the role of slaves. In the downlink direction, a slave receives the payload data symbols from a master. Thus, the slave receives payload data symbols via only one active radio channel. The situation is more complex in the uplink direction. Here, the master receives payload data symbols from a plurality of slaves, typically in parallel.

In order to enable an application of the inventive concept also in uplink radio communication, forming the data vectors for transmission via an uplink radio channel of the radio communication system on the side of the radio transmitter comprises, in preferred embodiments,

- filling only a transmitter-specific data vector section of the payload data vectors, which is assigned unambiguously in the radio communication system only to the given radio transmitter, with the guard section and with the fraction of payload data that is to be encoded in the respective payload data symbol, and

- filling any remaining section of the data vectors with the reference value.

By unambiguously assigning to each slave transmitter in the radio communication system a transmitter-specific data vector section of the payload data vectors, the master receiver is able to distinguish the respective guard sections it receives from the different slave transmitters, and is thus enabled to make an unambiguous identification and perform channel estimation individually with respect to each slave transmitter, and thus each corresponding radio channel, even if the different slave transmitters send their payload data symbols in parallel. Filling remaining sections of the respective data vectors with the reference value on the transmitter side avoids interference on the receiver side between the signals received from the different slaves.

Method for Operating a Radio Receiver - Channel Estimation

According to a second aspect of the present invention, a method for operating a radio receiver in performing channel estimation for decoding encoded payload data symbols received from a radio transmitter via a radio channel of a radio communication system is provided in accordance with claim 5. The method comprises:

- receiving a plurality of payload data symbols affected by multipath channel perturbation that each encode a respective fraction of payload data as a coefficient vector using a Parallel Sequence Spread Spectrum coding scheme that represent a product of a respective payload data vector of a predetermined length and a code matrix of mutually orthogonal codewords of a cyclic code;

- decorrelating the received encoded coefficient vectors affected by multipath channel perturbation;

- detecting in at least one of the decorrelated payload data symbols affected by multipath channel perturbation an encoded guard section having a pilot code embedded between two multiple-repetition sequences of an encoded reference value;

- decoding at least that fraction of the guard section which follows the pilot code, to determine respective channel coefficients as the respective decoded reference values indicative of a respective amount of multipath channel perturbation as a function of delay time;

- determining a channel estimation kernel as a sequence comprising at least those channel coefficients that differ from the predetermined reference value; and

- providing the determined channel estimation kernel for use in decoding the encoded pay-load data symbols that are affected by multipath channel perturbation.

As such, the method of the second aspect of the invention allows continuously receiving payload data in a sequence of payload data symbols. This is achieved by detecting in at least one of the decorrelated payload data symbols affected by multipath channel perturbation the encoded guard section having a pilot code embedded between two multiple-repetition sequences of an encoded reference value. Since the PSSS payload data symbols contain, in addition to a respective fraction of encoded payload data, the guard section in encoded form, the radio receiver performs channel estimation in parallel to receiving payload data.

In reception of payload data symbols affected by multipath propagation perturbation, the receiver decodes several superimposed, delayed copies of the transmitted signal. Since the PSSS codewords are cyclic shifts of a first codeword, a delayed code is thus identical to a code with a higher index. After decoding of the pilot symbol, therefore, the radio receiver detects (1) an undelayed line-of-sight contribution, and (2) additional contributions in subsequent coefficients of the decoded coefficient vector that originate from the delayed signal paths. The values of these subsequent coefficients of the decoded coefficients are used as the channel coefficients. Multipath propagation perturbation operates on each code in the symbol in a similar way. The received payload data thus represents a convolution of the transmitted data with a vector of the channel coefficients.

The reception process is not interrupted by receiving a preamble symbol for channel estimation purposes. In fact, the particular structure of the guard section encoded within the payload data symbol allows the receiver performing channel estimation without interruption of the reception of the payload data. Thus, a particularly high data rate can be achieved.

The method of the second aspect thus forms an aspect that is complementary to the method of the first aspect, in that it defines a process for handling, on the side of the radio receiver, the payload data symbols generated according to method of the first aspect and transmitted to the radio receiver.

In the following, embodiments of the method of the second aspect of the invention will be described.

One embodiment comprises decoding encoded payload data symbols received from a radio transmitter via an uplink radio channel of the radio communication system. In such an uplink radio communication, determining the channel estimation kernel preferably comprises determining the sequence of values of the channel coefficients as representations of complex numbers in a complex number plane.

Determining the channel coefficients as representations of complex numbers in a complex number plane is also useful for achieving a high accuracy in the downlink direction. However, for a simpler and therefore computationally faster implementation, the downlink direction comprises in an alternative embodiment determining the channel estimation kernel by determining the sequence of values of the channel coefficients as representations of non-complex numbers, in particular representations of real numbers.

In another embodiment, the channel estimation in the downlink direction of a radio communication system, which comprises a master and a plurality of slaves, is performed using a dedicated and periodically repeated channel estimation interval that is sequentially used by the different slaves.

In one embodiment, the method of the second aspect further comprises performing channel-specific uplink channel estimation for decoding payload data symbols received from a plurality of radio transmitters of the radio communication system via a plurality of uplink radio channels. In this embodiment, preferably, for each uplink radio channel a channel-specific uplink channel estimation is performed by the radio receiver, applying for each uplink channel the method of the second aspect with respect to only a channel-specific coefficient vector section of the coefficient vectors received via the respective uplink channel, which channel-specific coefficient vector section is assigned unambiguously only to the given radio transmitter using the respective uplink radio channel.

This embodiment forms a complementary method for handling payload data symbols received from a plurality of slave transmitters according to the transmitter-side embodiment for the uplink constellation described hereinabove.

One variant for implementation of this embodiment comprises

- detecting in at least one of the decorrelated payload data symbols received via a given uplink radio channel an encoded channel-specific guard section having a channel-specific pilot code embedded between two multiple-repetition sequences of an encoded reference value;

- decoding at least that fraction of the channel-specific guard section which follows the channel-specific pilot code, to determine respective channel-specific channel coefficients as the respective decoded reference values indicative of a respective channel-specific amount of multipath channel perturbation as a function of delay time;

- determining a channel-specific channel estimation kernel as a sequence comprising at least those channel coefficients that differ from the predetermined reference value; and

- providing the channel-specific determined channel estimation kernel for use in decoding the encoded payload data symbols received via the given uplink radio channel.

In order to improve the accuracy of channel estimation and thus allow improving the performance of a subsequent channel correction, one embodiment of the method of the second aspect comprises

- determining a plurality of channel estimation kernels for the same given radio communication channel by performing channel estimation for a plurality of payload data symbols comprising respective encoded guard sections;

- using the plurality of determined channel estimation kernels determine an average channel estimation kernel for the given radio communication channel;

- providing the determined average channel estimation kernel for use in decoding the encoded payload data symbols.

In the following, embodiments providing additional improvements in dealing with an offset of carrier frequencies between the transmitter side and the receiver side are described.

Each node (master node or slave node) has its own crystal oscillator. The frequencies of the oscillators do not match exactly. This frequency offset in the carrier frequency causes a constant rotation of the phase in the IQ diagram at the receiver. In order to transfer data reliably, this effect must be compensated for.

It is known to use a Costas Loop for this purpose. A Costas loop is generally described as a phase-locked loop (PLL) type circuit for carrier frequency recovery from suppressed-carrier modulation signals and phase modulation signals. An adjustable oscillator in a feedback loop is set to the carrier frequency and phase ("locked"). A central point is that the "lock" remains when the phase is rotated 180° in BPSK modulation. This achieves that a slave node remains synchronized with the master node, although the pure carrier frequency is not contained in the received signal. In downlink communication, the effect of the frequency offset is subsequently subtracted at the receiver of the slave nodes. As mentioned earlier, a preamble interrupts the data flow and leads to a lower data rate with increased latency. The design of the costas loop is determined by the modulation procedure. This means that the system is not variable in modulation. In addition, the Costas loop compensates for the effects of frequency offset without eliminating the offset itself.

In order to achieve a synchronization of the carrier frequencies without using a preamble or a costas loop, an embodiment additionally comprises the following steps:

- a front end unit of the receiver receiving a radio frequency signal representing the plurality of payload data symbols;

- transforming the received signal into a digital received baseband signal;

- measuring a symbol clock frequency in the digital received baseband signal;

- deriving a control voltage from the measured symbol clock frequency;

- providing the control voltage to a voltage-controlled oscillator that controls a super-ordinate reference phase-locked-loop;

- the voltage-controlled oscillator controlling the super-ordinate reference phase-locked-loop in generating and providing a reference clock signal having a reference clock frequency;

- the front end unit receiving the reference clock signal and deriving from it, using respective sub-ordinate phase locked loops, a digital clock signal for driving operation of the front end unit, and a receiver carrier frequency to be used by the front end unit in reception of the signal.

This way, not only channel estimation, but also the synchronization of the carrier frequencies can be achieved on the receiver side using the guard section in the payload data vectors encoded using PSSS and occasionally provided by the transmitter. As mentioned before, the guard section in such vectors of payload data to be transmitted is formed by a pilot value embedded between two multiple-repetition sequences of a reference value. The use of a preamble becomes unnecessary also for synchronization.

In contrast to many PLL applications, there is no need for the PLL to be tuned to a different frequency or quickly locked to the target frequency. After a start-up phase, the closed-loop radio system can be operated continuously with unchanged digital clocks. Therefore, a low pass with a low cut-off frequency is suitably used as a loop filter in preferred embodiments. As a result, the PLL regulates only slowly, which compensates for jitter in the control pulses and limits phase noise. This effect is large enough that the pilot code does not have to be sent out in every symbol. Instead, it is sufficient to send out and receive the pilot code at regular intervals and otherwise sending and receiving data symbols comprising no pilot code but more payload data.

In order to allow a receiver to synchronize reliably, in one variant of the present embodiment a start-up phase comprises only transmitting and receiving the pilot codes without payload data, before the payload data codes are added on the transmitter side.

Unlike the costas loop, where the difference between transmitter and receiver frequency is preserved, the proposed loop eliminates the cause of the problem by changing the receiver's carrier frequency.

The described synchronization method is not dependent on the used modulation scheme and allows a free choice of modulation.

In the uplink, according to the prior art the frequency offset had to be corrected by a phase correction at the respective slave according to known solutions of the prior art. This step can now be omitted by the described approach of adjusting the carrier frequency.

Another embodiment further comprises

- identifying a beginning of a payload data symbol by detecting a sudden rise of the received signal after a constant signal section formed by several constant chip values caused by the guard section;

- determining a peak time associated with a peak that forms a maximum of the received signal at an end of the sudden rise, which is caused by receiving the pilot code, and

- performing chip synchronization using the determined peak time.

In a further embodiment, a synchronization to a given external clock is achieved by adjusting the length of the cyclic prefix for the symbols and the chip duration, such that multiples of the symbol duration are equal to an external clock cycle. While known solutions for synchronization to an external clock require waiting after a preamble and a frame for a new clock signal, the present embodiment achieves the advantage in comparison with such known solutions that no waiting time is required after each frame, and, thus a higher data rate can be achieved.

Method for Operating a Radio Receiver - Channel Correction

According to a third aspect of the present invention, a method for operating a radio receiver in performing channel correction for decoding encoded payload data symbols received from a radio transmitter via a radio channel of a radio communication system is provided. The method comprises:

- performing channel estimation according to the method of the second aspect of the invention or one of its embodiments;

- obtaining a perturbed coefficient vector of perturbed coefficients $Din(i)$ that represent a product of a respective payload data vector and a code matrix of mutually orthogonal codewords of a cyclic code and that are affected by multipath channel perturbation, by performing decorrelation of a received signal sequence representing the perturbed coefficient vector, wherein $i = 0,1,2,...,m-1$ is an index indicating an order of the coefficients $Din(i)$ and $m$ is a total number of codewords of the cyclic code;

- performing channel correction by sequentially applying the channel correction to the coefficients $Din(i)$ of the perturbed coefficient vector, to obtain a channel-corrected coefficient vector of channel-corrected coefficients $Dout(i)$, by:

  - subtracting a respective current multipath correction coefficient $Dcorr(i)$ from a current perturbed coefficient $Din(i)$ of the perturbed coefficient vector, and subsequently applying a predetermined scaling factor to determine a current channel-corrected coefficient $Dout(i)$ of the coefficient vector, wherein $Dout(0) = Din(0)$; and wherein
  - the current multipath correction coefficient $Dcorr(i)$ is determined by iteratively, upon each determination of a respective preceding channel-corrected coefficient $Dout(i-j)$, accumulating multipath contributions of the respective preceding channel-corrected coefficient $Dout(i-j)$ to the respective upcoming multipath correction coefficients $Dcorr(i-j+p)$, wherein $j = 1, 2,...n$ is an index indicating an order of the channel coefficients $G(j)$ of the channel estimation kernel $G$, $n$ is a total number of the channel coefficients $G(j)$ in the channel estimation kernel, and $p = 1, 2..., j$ is a running index;

wherein an order of performing decorrelation and performing channel correction is interchangeable.

The method of the third aspect of the invention provides a particularly effective and simple solution for channel correction in a radio communication system based on PSSS technology. The method of the third aspect is based on usage of the method of the first aspect of the invention on the transmitter side, and on the usage of the method of the second aspect of the invention for channel estimation.

The channel correction method of the third aspect is based on the recognition that a distorted version of the coefficient vector obtained after decorrelation at the radio receiver can be represented as a convolution of an emitted payload data vector with the channel coefficients of the channel estimation kernel. Based on this recognition, the efficient iterative deconvolution process as defined by the method of the third aspect is proposed.

It is noted that in a pseudo code representation, the channel correction performed on the perturbed coefficients $Din(i)$ of the perturbed coefficient vector according to the method of the third aspect is equivalently described as follows:
For i from 0 to n:

$$Dout(i) = (Din(i)-Dcorr(i)) \ / \ SF$$

For j from 1 to m:

$$Dcorr(i+j) = Dcorr(i+j) + Dout(i) * G(j),$$

wherein

Din is the uncorrected perturbed coefficient vector with length n
Dout is the channel-corrected coefficient vector
G is the vector of the channel coefficients with length m+1

SF is the scaling factor

i= 0, 1, 2, ..., n is an index indicating an order of the coefficients Din (i)

j = 1, 2, ...m is an index indicating an order of the channel coefficients G(j)

In the following, embodiments of the method of the third aspect will be described.

For implementing dynamic channel estimation, one embodiment of the method of the third aspect provides an estimate of when a new channel estimation is required by determining, based on the cyclic structure of the convolution. After deconvolution of the payload data vector, the cyclic structure of the convolution returns to the cyclic multiple-repetition sequences of the guard section assuming the reference values. Values deviating from the reference value as a result from the iterative procedure performed are used as an indication that the channel estimation has become inaccurate and requires an update.

In one embodiment, the method comprises calculating the multipath contributions of the respective preceding current channel-corrected coefficients Dout(i-j) to the respective upcoming multipath correction coefficients Dcorr(i-j+p), by multiplying the respective channel coefficients G(p) with the respective preceding channel-corrected coefficient Dout(i-j).

The scaling factor is in preferred embodiments equal to the line-of-sight component G(0) of the channel estimation kernel.

Another embodiment additionally comprises, after decoding, mapping the determined decoded coefficient value of the decoded payload data vector to a nearest symbol of a constellation diagram according to the modulation scheme used.

The nearest symbol is determined as that symbol ("point") of the constellation diagram having a smallest distance from the determined decoded coefficient value according to a predetermined distance measure. For instance, using a binary phase shift keying (BPSK) modulation scheme, the symbols or points of the constellation diagram are -1 and 1. An exemplary decoded coefficient value of the decoded payload data vector having a value of 0,2 is mapped to 1. An exemplary decoded coefficient value of the decoded payload data vector having a value of -0,4 is mapped to -1. In other modulation schemes, such as quaternary phase shift keying etc., suitable distance measures known per se are used and applied in the constellation diagram to perform the mapping step.

A further embodiment of the method of the third aspect is suitable in particular for an uplink scenario. It thus forms a method for operating a radio receiver in performing channel correction for decoding encoded payload data symbols received from a plurality of radio transmitters via a corresponding plurality uplink radio channels of a radio communication system. This embodiment comprises:

- for each uplink radio channel, performing channel-specific channel correction according to the method of claim of the third aspect or one of its embodiments, applying for each uplink channel the channel correction method of the third aspect with respect to only the channel-specific coefficient vector section of the coefficient vectors received via the respective uplink channel, which channel-specific coefficient vector section is assigned unambiguously only to the given radio transmitter using the respective uplink radio channel; wherein

- performing channel estimation is done for each uplink radio channel separately as a channel-specific uplink channel estimation according to one of the uplink channel estimation methods, i.e. according the method of claim 6 or 7.

Radio Transmitter

According to a fourth aspect of the present invention, a radio transmitter for transmitting payload data via a radio channel of a radio communication system is provided. The radio transmitter comprises a transmitter baseband-processing unit, which is configured

- to form payload data vectors of a predetermined length, each including a respective fraction of payload data to be transmitted;

- to include in at least one of the payload data vectors, in addition to the respective fraction of the payload data, a guard section formed by a pilot value embedded between two multiple-repetition sequences of a reference value; and

- to encode the payload data vectors to generate payload data symbols as encoded coefficient vectors, by determining respective products of the respective payload data vectors and a code matrix of mutually orthogonal codewords of a cyclic code, using a Parallel Sequence Spread Spectrum coding scheme, and to enclose the pilot value as a pilot code by a predetermined channel-estimation codeword of the cyclic code.

The radio transmitter of the fourth aspect thus allows performing the method of the first aspect, and has embodiments that implement the methods of the embodiments of the method of the first aspect described hereinabove. For a description of such embodiments and the corresponding advantages, reference is made to the description of the first aspect of the invention and its embodiments.

Radio Receiver

According to a fifth aspect of the present invention, a radio receiver for receiving payload data via a radio channel of a radio communication system is provided. The radio receiver comprises a receiver baseband-processing unit for processing a plurality of payload data symbols from a radio transmitter via a radio channel of a radio communication system, the pay-load data symbols each encoding a respective fraction of payload data as a coefficient vector encoded using a Parallel Sequence Spread Spectrum coding scheme and representing a product of a respective payload data vector of a predetermined length and a code matrix of mutually orthogonal codewords of a cyclic code.

The receiver baseband-processing unit comprises a decorrelator, which is configured to decorrelate the received encoded coefficient vectors and to provide decorrelated payload data symbols. The receiver baseband-processing unit is configured to

- detect in at least one of the decorrelated payload data symbols an encoded guard section having a pilot code embedded between two multiple-repetition sequences of an encoded reference value;

- decode at least that fraction of the guard section which follows the pilot code, to determine respective channel coefficients as the respective decoded reference values indicative of a respective amount of multipath channel perturbation as a function of delay time;

- determine a channel estimation kernel as a sequence comprising at least those channel coefficients that differ from the predetermined reference value; and

- provide the determined channel estimation kernel for use in decoding the encoded pay-load data symbols.

The radio receiver of the fifth aspect thus allows performing the method of the second aspect, and has embodiments that implement the embodiments of the method of the second aspect and of the method of the third aspect described hereinabove. For a description of such embodiments and the corresponding advantages, reference is made to the description of the second and third aspects of the invention and their embodiments.

In a particularly advantageous embodiment of the radio receiver that implements the method of the third aspect, the receiver baseband-processing unit comprises

- a decorrelator, which is configured to perform decorrelation of a received signal sequence representing the perturbed coefficient vector, to obtain a perturbed coefficient vector of perturbed coefficients $D_{in}(i)$ that represent a product of a respective payload data vector and a code matrix of mutually orthogonal codewords of a cyclic code and that are affected by multipath channel perturbation, wherein $i = 0,1,2,...,m-1$ is an index indicating an order of the coefficients $D_{in}(i)$ and $m$ is a total number of codewords of the cyclic code;

- a channel correction unit, which is configured to sequentially apply channel correction to the perturbed coefficients $D_{in}(i)$ of the perturbed coefficient vector, so as to obtain a channel-corrected coefficient vector of channel-corrected coefficients $D_{out}(i)$, by:

    - subtracting a respective current multipath correction coefficient $D_{corr}(i)$ from a current perturbed coefficient $D_{in}(i)$ of the perturbed coefficient vector, and subsequently applying a predetermined scaling factor to determine a current channel-corrected coefficient $D_{out}(i)$ of the coefficient vector, wherein $D_{out}(0) = D_{in}(0)$; and

    - determining the current multipath correction coefficient $D_{corr}(i)$ by iteratively, upon each determination of a respective preceding channel-corrected coefficient $D_{out}(i-j)$, accumulating multipath contributions of the respective preceding channel-corrected coefficient $D_{out}(i-j)$ to the respective upcoming multipath correction coefficients $D_{corr}(i-j+p)$, wherein $j = 1, 2,...n$ is an index indicating an order of the channel coefficients $G(j)$ of the channel estimation kernel $G$, $n$ is a total number of the channel coefficients $G(j)$ in the channel estimation kernel, and $p = 1, 2..., j$ is a running index.

In another embodiment of the radio receiver, the receiver baseband-processing unit, for performing channel correction for decoding encoded payload data symbols received from a plurality of radio transmitters via a corresponding plurality uplink radio channels is configured to

- perform channel-specific uplink channel estimation for each uplink radio channel by performing channel estimation with respect to only a channel-specific coefficient vector section of the coefficient vectors received via the respective uplink channel, which channel-specific coefficient vector section is assigned unambiguously only to the given radio transmitter using the respective uplink radio channel; and

- perform, separately for each uplink radio channel, channel-specific channel correction, with respect to only the channel-specific coefficient vector section of the coefficient vectors received via the respective uplink channel.

A further embodiment of the radio receiver, which is advantageous for achieving carrier frequency synchronization without requiring a preamble, comprises a front end unit driven by a digital clock signal and using a receiver carrier frequency for receiving a radio frequency signal representing the plurality of payload data symbols and for providing a digital received baseband signal.

In this embodiment, the receiver baseband-processing unit comprises a first correlator, which receives the digital received baseband signal and is configured to measure a symbol clock frequency in the digital received baseband signal, to derive a control voltage from the symbol clock frequency, and to provide the control voltage.

In this embodiment, the receiver further comprises a super-ordinate phase-locked-loop with a voltage-controlled oscillator, which receives the control voltage and is configured, using the control voltage, to generate and provide a reference clock signal having a reference clock frequency. The front end unit receives the reference clock signal and comprises respective sub-ordinate phase locked loops, which are configured to respectively derive from the reference clock signal a digital clock signal for driving operation of the front end unit and a receiver carrier frequency to be used by the front end unit in reception of the signal.

Further Aspects of the Invention

In the following, further aspects of the invention will be briefly described, which are based on the detailed description of the previously described aspects of the invention.

A sixth aspect of the present invention relates to a radio transceiver comprising a radio transmitter part having the features of the radio transmitter of the fourth aspect or one of its embodiments, and a radio receiver part having the features of the radio receiver of the fifth aspect or one of its embodiments.

A seventh aspect of the present invention is formed by a radio communication arrangement comprising at least one transmitter according to the fourth aspect of the invention and at least one transceiver according to the fifth aspect of the invention, or a plurality of radio transceivers according to the sixth aspect of the invention. The radio communication arrangement is preferably arranged for closed-loop communication in a star-type topology, wherein one transceiver forms a master node and a plurality of other transceivers form slave nodes.

An eighth aspect of the present invention is formed by a computer program comprising executable code which, when executed by a computer, causes the computer to carry out the method of the first aspect of the invention or one of its embodiments.

A ninth aspect of the present invention is formed by a computer program comprising executable code which, when executed by a computer, causes the computer to carry out the method of the second aspect of the invention or one of its embodiments.

A tenth aspect of the present invention is formed by a computer program comprising executable code which, when executed by a computer, causes the computer to carry out the method of the third aspect of the invention or one of its embodiments.

In a preferred embodiment of the computer program of the tenth aspect, the computer program comprises executable code for performing the channel correction performed on the perturbed coefficients, which in a pseudo code representation is equivalently described as follows:

For i from 0 to n:

$$\mathtt{Dout(i) = (Din(i)-Dcorr(i)) / SF}$$

For j from 1 to m:

$$\mathtt{Dcorr(i+j) = Dcorr(i+j) + Dout(i) * G(j),}$$

wherein

Din is the uncorrected perturbed coefficient vector with length n
Dout is the channel-corrected coefficient coefficient vector
G is the vector of the channel coefficients with length m+1
SF is the scaling factor
i= 0, 1, 2, ..., n is an index indicating an order of the coefficients Din(i)
j = 1, 2, ...m is an index indicating an order of the channel coefficients G(j).

BRIEF DESCRIPTION OF THE DRAWINGS

In the following, further embodiments will be described with reference to the enclosed drawings. In the drawings,

Fig. 1 is an illustration of a radio communication system having a star topology;

Fig. 2 shows a schematic illustration of a frame structure according to the prior art, as used for downlink and uplink transmission with PSSS coding in a prior-art closed-loop radio communication system of Fig. 1;

Fig. 3 is a schematic illustration of a sequence of payload data vectors generated by a radio transmitter for transmission via a radio channel according to an embodiment of a method of the present invention;

Fig. 4 is a simplified illustration of a formation of PSSS payload data symbols from payload data vectors;

Fig. 5 is an illustration of a transmitter signal representing a payload data vector to be transmitted via the radio channel, shown after BPSK modulation;

Fig. 6 is an illustration of a receiver signal representing the payload data vector of Fig. 5 after reception via the radio channel and decorrelation by a radio receiver;

Fig. 7 is a flow diagram of an embodiment method for operating a radio transmitter in transmitting payload data via a radio channel of a radio communication system;

Fig. 8 is a flow diagram of an embodiment of a method for operating a radio receiver in performing channel estimation for decoding encoded payload data symbols received from a radio transmitter via a radio channel of a radio communication system;

Fig. 9 is a schematic illustration of a sequence of payload data vectors generated by a plurality of radio transmitters for transmission in parallel via individual radio channels in an uplink connection according to an embodiment of a method of the present invention;

Fig. 10 is an illustration of two payload data vectors to be transmitted in parallel via two different uplink radio channels in a radio communication system, shown after BPSK modulation;

Fig. 11 is an illustration of a receiver signal representing an exemplary channel estimation kernel of a first radio channel in Fig. 10;

Fig. 12 is an illustration of a receiver signal representing an exemplary channel estimation kernel of a second radio channel in Fig. 10;

Fig. 13 is an illustration of a receiver signal representing the individual payload data vectors of Fig. 10 after reception via the respective uplink radio channels and decorrelation by a radio receiver, and in combination as received by the receiver;

Fig. 14 is a schematic block diagram illustrating a baseband processing unit for processing downlink radio communication for use in a radio receiver according to an embodiment of the invention;

Fig. 15 is a schematic block diagram illustrating a baseband processing unit for processing uplink radio communication for use in a radio receiver according to an embodiment of the invention.

Fig. 16 is a schematic block diagram illustrating parts of a receiver in a slave relevant for carrier synchronization in an exemplary PSSS closed loop system.

Fig. 17 is a diagram illustrating differences in a received signal after the first correlator of the receiver of Fig. 16 in comparison with a receiver according to the state of the art.

Fig. 18 is an IQ diagram for illustration of an embodiment of a decoding method for decoding payload data.

DETAILED DESCRIPTION OF EMBODIMENTS BASED ON THE DRAWINGS

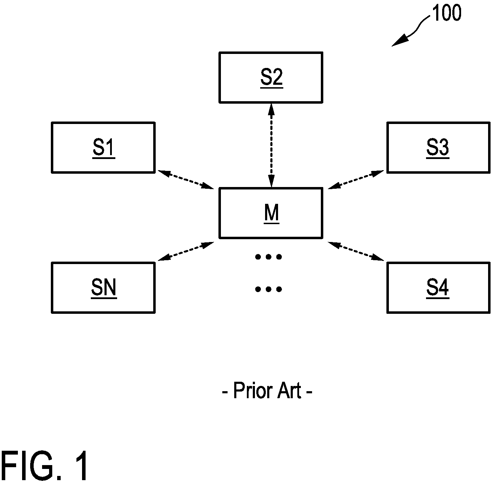

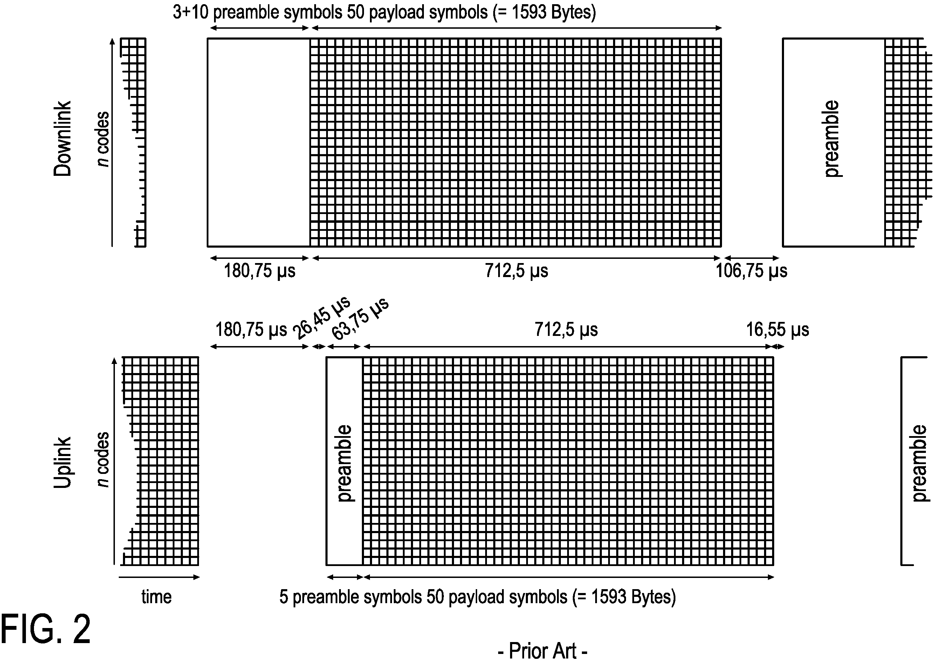

The following description first turns to Figs. 1 and 2 in parallel.

Fig. 1 is an illustration of an exemplary radio communication system 100. The radio communication system 100 under consideration has a star topology with one master M and several slaves Si = S1, S2, S3, S4, ..., SN. This topology is per se known and also forms a basis for embodiments of the present invention described herein. In this topology, a downlink channel is a radio channel for communication in a direction from the master M to one or more of the slaves S1, ..., SN, and an uplink channel is a radio channel for communication in a direction from one of the slaves S1, ..., SN to the master M. Radio channels are indicated as double arrows for simplicity, without implying that the same physical resources are necessarily used in both directions. Typically, different radio frequencies are used for transmission in uplink and downlink channels.

Fig. 2 shows a schematic illustration of a frame structure according to the prior art, as used for downlink and uplink transmission with PSSS coding in a prior-art closed-loop radio communication system. The horizontal axis indicates the time and thus shows a chronological sequence of PSSS symbols. The two frames sent in uplink and downlink are transmitted almost simultaneously.

In payload data symbols, a plurality of chips encoding payload data plus a cyclic addition are transmitted, as indicated along the vertical axis. In addition, special preamble symbols are transmitted. A large gap of 180,75+26,45 microseconds before an uplink frame is used for channel estimation.

The downlink has a relatively unproblematic broadcast situation. During the preamble, each slave independently performs a synchronization and channel estimation and then uses this information to decode the received payload data symbols. This forms a usual procedure in a packet-based PSSS procedure.

In the uplink, the situation is much more complicated because several slaves can transmit at the same time. On the one hand, the slaves must be precisely synchronized, taking into account the different distances to the master. Synchronization techniques are known as such and will not be described herein. On the other hand, channel correction in the uplink is problematic. At the antenna of the master receiver, there is a superposition of partial signals received from the different slaves. Each of these partial signals has been distorted by a different radio channel. In the prior art, this issue is handled by inversely pre-distorpre-distorting the signal to be transmitted from each slave. After transmission, the original, unaltered signal is detected by the master and can therefore be easily superimposed with the other incoming signals.

However, in known prior art systems, the slave has evaluated channel coefficients of the uplink channel using the downlink channel and thus the downlink frequency, while it has to pre-distort the transmission using (actually unknown) coefficients for the uplink frequency. One known solution is to briefly switch to the uplink frequency within the downlink preamble. The slaves evaluate the channel coefficients for the uplink in this time interval. Another solution is to swap frequencies between uplink and downlink, as will be described in more detail further below.

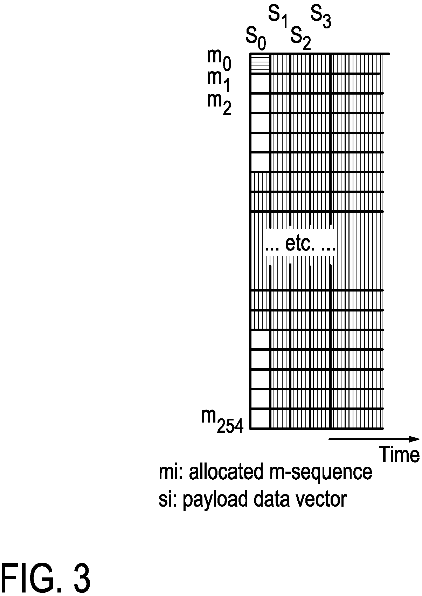

Fig. 3 is a schematic illustration of a sequence 300 of payload data vectors generated by a radio transmitter for transmission via a radio channel according to an embodiment of a method of the present invention.

According to the structure shown, payload data vectors of a predetermined length are formed, each including a respective fraction of payload data to be transmitted payload data is encoded as a linear combination of m-sequences according to a parallel sequence spread spectrum (PSSS) technology. Time is again shown on the horizontal axis. A code family of codewords in the form of m-sequences m0, m1, m2, ....... is generated by cyclically shifting an underlying m-sequence m0. These codes have particularly good orthogonality properties. For instance, a code with the length 255, i.e. 255 chips, is used. The code family then contains 255 m-sequences. Codes with length 511, 1023, ... etc. are used in different embodiments.

The vertical axis in the illustration of Fig. 3 is thus assigned to the different codewords, such as m0, m1, m2, ..., m254 in the present example. Other code lengths are possible. Thus, a "virtual channel" is provided with each codeword. The data is transmitted in parallel in these 255 channels.

Data is encoded by a corresponding number of payload data values specifying the coefficients of a respective linear combination of the codewords. With BPSK coding, the coefficients of the linear combination are +1 or -1. This allows one bit to be transmitted in each resource element, i.e., each box in the illustration. Higher modulation methods could transfer more bits per resource element and can be used in other embodiments.

Continuous transmission in both directions is ensured by using two different frequency bands for downlink and uplink.

The radio receiver calculates a correlation of the incoming signal with the codes in the baseband to extract the data. Due to the cyclic rotation a single correlator is sufficient, which generates the correlation values for m0, m1, m2... one after the other.

With multipath reception, the receiver decodes several superimposed, delayed copies of the transmitted signal. The PSSS codes are cyclic shifts of the first code m0. A delayed code is thus identical to a code with a higher index, modulo 255. So the delayed code of m254 is m0, m1,... etc. For example, with respect to the code m0 transmitted in the box marked red (to be translated to horizontal hatching) after decoding, the receiver will detect

(1) a contribution at the same position in the diagram that originates from the line-of-sight transmission, and

(2) additional contributions below the red box that originate from the delayed signal paths. These values are used as the channel coefficients.

The distortion through the channel operates on each code in the symbol in a similar way. The received data are thus the convolution of the transmitted data with the vector of the channel coefficients. In this vector, only a few components at the beginning are relevant and have values different from zero. This number of relevant components is referred to as K in the following. The number K can be estimated from the geometry of the system, the speed of light and the chip duration. The exact number is given by the real channel. However, in practice and for chip durations in today's usual range of 20 - 50 ns, no more than 5 codes before and 5 codes after the channel estimation value are required. The diagram in Fig. 3 was drawn for the case K = 5.

In detail, the situation is as follows.

The code m0 is transmitted in the red element. The codewords in the grey elements are not used for payload data transmission by the radio transmitter if the channel estimation is to be carried out by the radio receiver in a given payload data symbol. Instead the corresponding values of the payload data vector are filled with a reference value, suitably zero (0). In the decoded values for m1, m2, ..., mK the values of the channel estimation are then obtained.

In the same symbol, all green (vertically hatched) elements can be used for encoding pay-load data. In this way, a channel estimation without interruption of the payload data transmission is achieved. In other words, no preamble is required for channel estimation.

The present description for simplicity assumes that the channel delays the codes by a multiple of the chip duration of the chip, i.e., that the delayed code m0 is identical to another code. In reality, there may occur delay times which lie between the values k*Tchip. In addition, the phase of the carrier wave is rotated relative to the line-of-sight during reflection and complex numbers must be considered. Thus each delayed path contributes to several symbols in a complicated way. However, this is irrelevant for further considerations in the present context. Only the decoded values are of interest after the imaginary part has been rejected and the correlation has been calculated. The required properties are:

- The additional values generated by the real channel are "below" the transmitted resource element, modulo 255.

- Only a few values "directly below" the emitted element are relevant other than zero.

- The values result from the convolution of the data of a symbol with a fixed (short) kernel, which characterizes the channel.

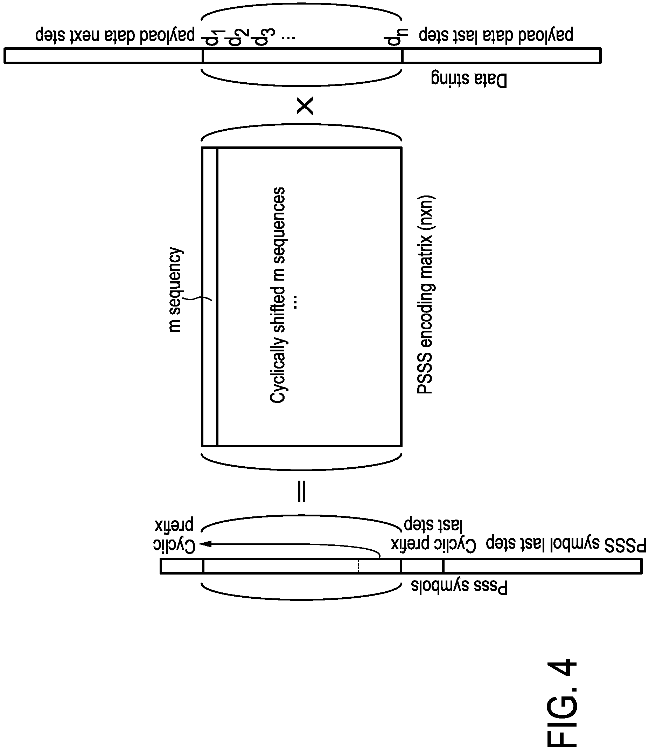

Fig. 4 is a simplified illustration of a formation of PSSS payload data symbols from payload data vectors. Encoding can be understood easily as a product of the respective payload data vectors having payload data values d1, d2, ..., dn, and a code matrix of mutually orthogonal codewords of m-sequences data values in the payload data vector are 0 or 1. With a BPSK modulation, the coefficients of the codes are +1 or-1, and the reference value used in the guard section is suitably 0. This is not meant to imply that actual encoding must be performed by calculating such products. The payload data symbols obtained in addition have a cyclic prefix attached at the end of the payload data symbol and repeating a predetermined number of initial entries of the encoded coefficient vector of the payload data symbol.

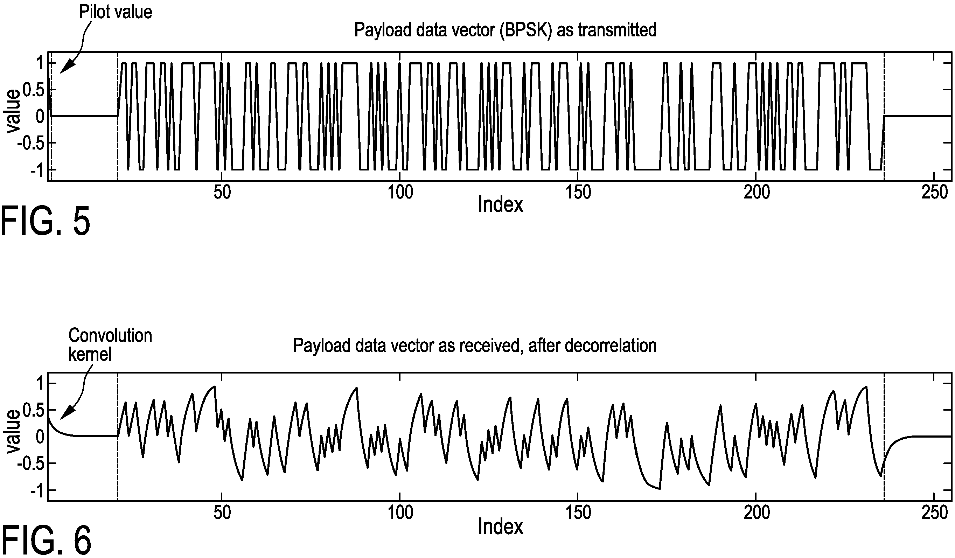

Fig. 5 is an illustration of a transmitter signal representing a payload data vector to be transmitted via the radio channel, shown after BPSK modulation. With a BPSK modulation, the coefficients of the codes are +1 or -1. In Fig. 5, for a data value 0 the coefficient of the corresponding code is -1, for a data value 1 the coefficient is +1.

Fig. 6 is an illustration of a receiver signal representing the payload data vector of Fig. 5 after reception via the radio channel and decorrelation by a radio receiver. As illustrated, after decorrelation at the radio receiver, a distorted version of the coefficient vector is obtained. The distored version corresponds to a convolution of the emitted payload data symbol with the channel coefficients of the radio channel. This distorted coefficient payload data symbol is shown on the right for exemplary channel coefficients shown on the left. In the transmitted data, the first codes after 1 (red) were not used for channel estimation. The number of free elements is at least as large as the number of channel coefficients which are different from zero. This enables an efficient iterative deconvolution which is described further below. In the example in Fig. 6, 20 codes were left blank.

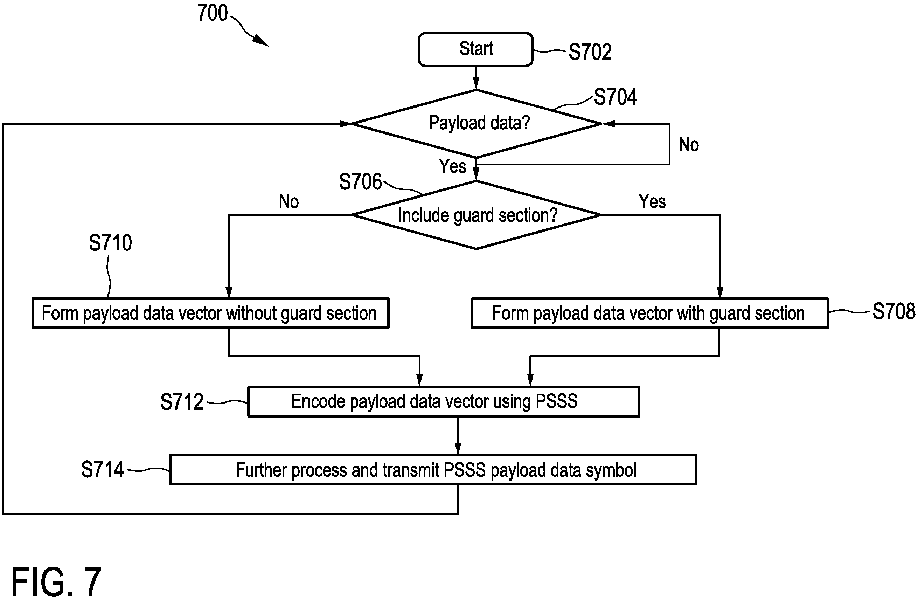

Fig. 7 is a flow diagram of an embodiment of a method 700 for operating a radio transmitter in transmitting payload data via a radio channel of a radio communication system.

The method 700 starts in a step S702. After determining that payload data is to be transmitted in a step S704, it is determined in a step S706 whether a guard section is to be transmitted along with payload data in a given payload data symbol. An advantage of this method is that the channel estimation of dynamic channels can be renewed as often as required. In extreme cases, the channel estimation could be refreshed in each symbol. In other cases, after ascertaining channel-quality information indicative of an error rate of receiving the payload data symbols by a radio receiver, a relative frequency of those payload data symbols, which include the encoded guard section can be adapted.

After that, a payload data vector of a predetermined length is formed, including a respective fraction of payload data to be transmitted. In case the preceding step S706 has determined so, a guard section is included in the formation of the payload data vector in a step S708 The guard section is formed by a pilot value embedded between two multiple-repetition sequences of a reference value. On the other hand, in case the preceding step S706 has determined that no guard section is to be included, the formation of the payload data vector is performed in a step S710 without including the guard section,

Subsequently, in a step S712, the payload data vector is encoded using PSSS, to generate a payload data symbol as an encoded coefficient vector. This process can be described as determining a product of the respective payload data vectors and a code matrix of mutually orthogonal codewords of a cyclic code, using the Parallel Sequence Spread Spectrum coding scheme. The pilot value of the payload data vector is encoded as a pilot code by a predetermined channel-estimation codeword of the cyclic code, such as for example the m-sequence m0.

The method then further processes and transmits the PSSS payload data symbol in a step S714 and branches back to determining whether further payload data is to be transmitted, i.e., to step S704.

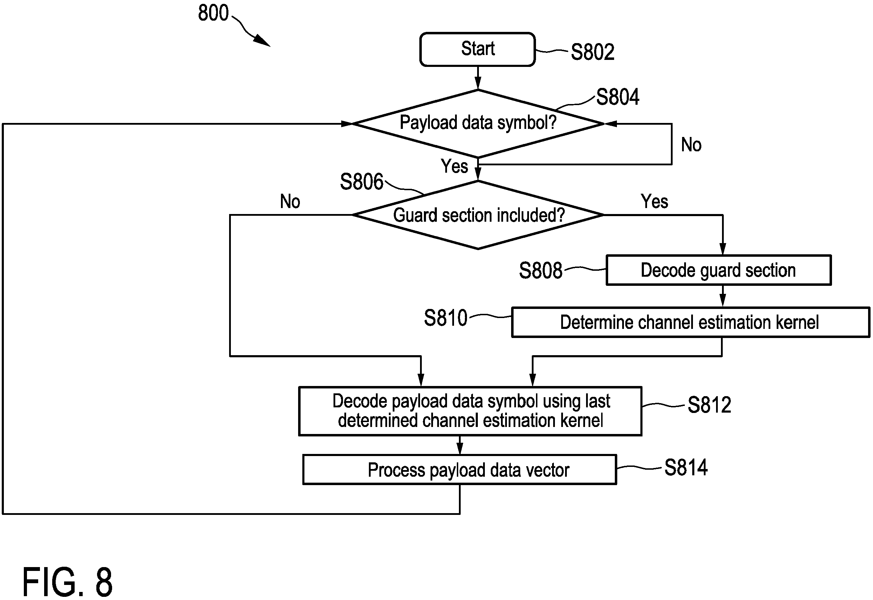

Fig. 8 is a flow diagram of an embodiment of a method 800 for operating a radio receiver in performing channel estimation for decoding encoded payload data symbols received from a radio transmitter via a radio channel of a radio communication system.

The method 800 starts in a step S802, followed by a step S804 of detecting the reception of a payload data symbol. The plurality of payload data symbols received are assumed to be affected by multipath channel perturbation. They each encode a respective fraction of payload data as a coefficient vector encoded using a Parallel Sequence Spread Spectrum coding scheme.

After decorrelating the received encoded coefficient vectors affected by multipath channel perturbation (not shown in Fig. 8), it is determined in a step S806 whether or not the given decorrelated payload data symbol affected by multi-path channel perturbation includes an encoded guard section having a pilot code embedded between two multiple-repetition sequences of an encoded reference value.

If this is determined to be the case, at least that fraction of the guard section which follows the pilot code is decoded in a step S808, to determine respective channel coefficients as the respective decoded reference values indicative of a respective amount of multipath channel perturbation as a function of delay time. From that a channel estimation kernel is determined in a step S810 as a sequence comprising at least those channel coefficients that differ from the predetermined reference value. The determined channel estimation kernel is then provided for use in subsequently decoding, in a step S812, the encoded payload data symbols that are affected by multipath channel perturbation. In case the currently processed payload data symbol does not include a guard section, a previously determined channel estimation kernel is used for decoding, and the method proceeds directly from the corresponding determination that no guard section is included in step S806 to decoding the payload data symbol in the step S812, using the previously determined channel estimation kernel.

Subsequently the payload data vector determined by decoding is further processed by the radio receiver in a step S814. From here, the method branches back to performing the step S804 for detecting the reception of a next payload data symbol.

The method of Fig. 8 is particularly suitable for performing channel estimation a downlink connection. However, the following shows that it can also be used in an uplink connection with only slight modifications.

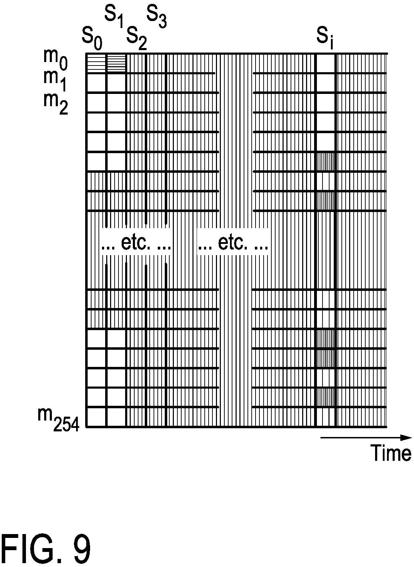

Reference will be made in the following to Figs. 9 to 13 in parallel.

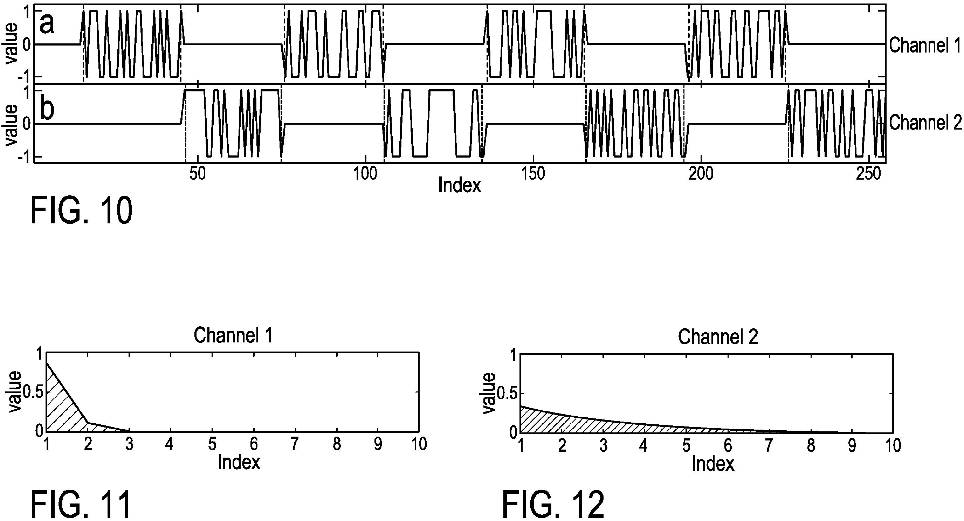

Fig. 9 is a schematic illustration of a sequence of payload data vectors generated by a plurality of radio transmitters for transmission in parallel via individual radio channels in an uplink connection according to an embodiment of a method of the present invention. Fig. 10 is an illustration of two payload data vectors to be transmitted in parallel via two different uplink radio channels in a radio communication system, shown after BPSK modulation. Fig. 11 is an illustration of a receiver signal representing an exemplary channel estimation kernel of a first radio channel in Fig. 10.

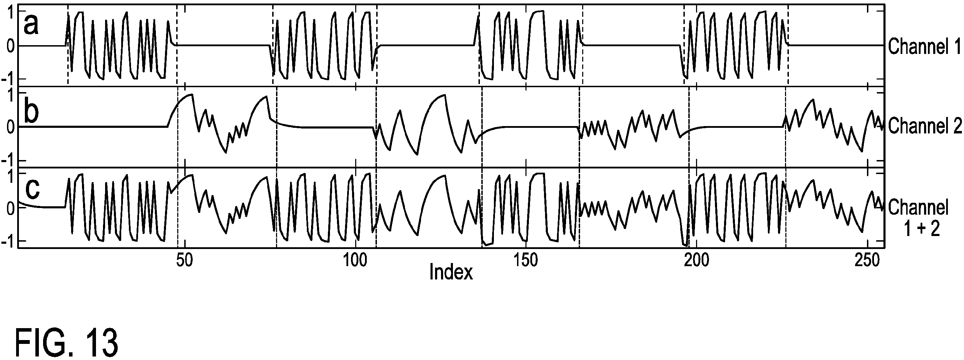

Fig. 12 is an illustration of a receiver signal representing an exemplary channel estimation kernel of a second radio channel in Fig. 10. Fig. 13 is an illustration of a receiver signal representing the individual payload data vectors of Fig. 10 after reception via the respective uplink radio channels and decorrelation by a radio receiver, and in combination as received by the receiver.

As described above, in a PSSS closed-loop system, the uplink is more complicated to handle, as multiple or all slaves may transmit simultaneously. The case occurs when the codes in a symbol are assigned to different slaves. In Fig. 9 this is indicated for two slaves in the a symbol Si (light green = slave S1, dark green = slave S2). Such an assignment is desirable because it allows short latency periods and maximum flexibility in the allocation of resource elements.

According to the prior art, each slave pre-distorts transmitted symbols. All available codes for user data are used, including those marked in grey. Each slave has a channel estimate for the uplink band at its disposal, which is used for inverse pre-distorpre-distortion of the frames. The channel effects undo this pre-distortion. The antenna of the master then receives the superposition of the contributions of the different slaves without channel effects. The disadvantage of this method is that the up- and downlink bands have to be exchanged periodically in order to obtain a channel estimation at the relevant carrier frequency. The coefficients are only used the next time the tapes are swapped. Therefore, they may be "stale" (too old) for dynamically changing radio channels. Alternatively, the exchange of the frequency band could be avoided if master and slaves share a single band in a time duplex. However, this method leads to high latencies and can only be used in special cases. Another disadvantage is the unbalanced processing of the channel correction between master and slaves. This leads to additional implementation effort.

The solution proposed here, however, is a variant of the disclosed PSSS channel estimation, in which the channel estimation is performed at the receiver analogously to the method explained with reference to Fig. 8. Specifically, the slaves transmit their frames without pre-distortion. The transmission is therefore distorted by the different channels at the antenna of the master, and these signals add up at the antenna of the master. The variant described here avoids the stated disadvantages of pre-distortion.

A separate channel estimation is determined at the master for each slave. This is done using the same procedure as in Fig. 8. Some symbols are selected to obtain the channel estimation for one slave at a time. In Figure 9, slaves S1, S2,... send out the pilot code as the sequence m0 (light red and dark red) one after the other as the only one, while all slaves keep the grey elements free. The master reads the channel coefficients for the corresponding channel in the underlying elements.

It is noted that the first m-sequence m0 does not necessarily have to be used to determine the channel coefficients. Any other sequence mi can be transmitted at the slave for this purpose, provided that all slaves leave the elements above and below free cyclically. In particular, it is possible to determine the channel coefficients for several slaves simultaneously in one symbol.

The next step is to equalize the raw data using these channel coefficients. Figure 10 illustrates the situation using an example with two slaves, S1 and S2. Here, for example, blocks of 30 codes each were assigned alternately to the slaves. The raw data (as coefficient vectors with values +1 or -1) to be transmitted via by the slaves S1 and S2 via respective channels 1 and 2 and are presented in Fig. 10 in respective sections a and b. The radio transmission folds these raw data with the two different channels. The multipath propagation effects of the channels 1 and 2 are represented by illustrations of respective channel estimation kernels in Figs. 11 and 12. Fig. 13 shows the results of the convolution separately in sections a and b, whereas section c of Fig. 13 shows the sum as calculated in the correlator of the master. This is the Input Din(i), which has to be equalized by channel correction.

It should be noted that the iterative deconvolution introduced here in modified form can also be used for pre-distortion (i.e. convolution) if a suitable number of elements is left free (grey elements in symbol si in Fig. 7).

The topic here, however, is a variant of the PSSS Closed Loop System in which the channel equalization is performed at the receiver, analogous to the downlink. So the slaves transmit their frames without pre-distortion and are therefore received distorted by the different channels at the antenna of the master, and these signals add up at the antenna of the master. The variant described here avoids the stated disadvantages of pre-distorpre-distortion. The task now is to perform the channel correction on the master.

As the first partial task, a separate channel estimation must be determined at the master for each slave. This can be done in a simple way using the same procedure as in the downlink. Various symbols are selected to obtain the channel estimation for one slave at a time. In Figure 7, the slaves S1, S2,... send out the sequence m0 (red and dark red) one after the other as the only one, while all slaves keep the grey elements free. The master reads the channel coefficients for the corresponding channel in the underlying elements. The first sequence m0 does not necessarily have to be used to determine the channel coefficients. Any other sequence mi can be transmitted at the slave, provided that all slaves leave the elements above and below free cyclically. In particular, it is possible to determine the channel coefficients for several slaves simultaneously in one symbol.

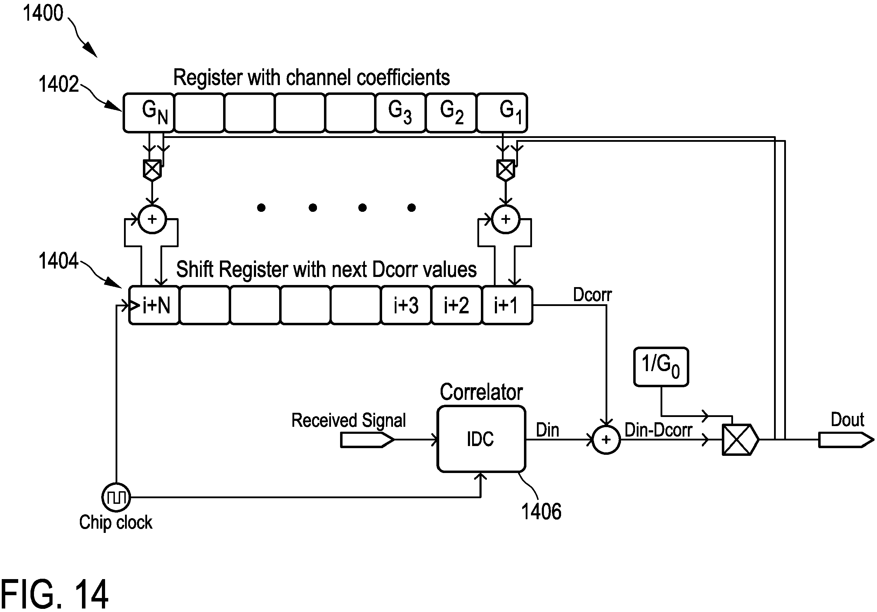

Fig. 14 is a schematic block diagram illustrating a baseband processing unit 1400 for processing downlink radio communication in a radio receiver according to an embodiment of the invention. The baseband processing unit is particularly suited for a downlink connection.

The baseband processing unit comprises a register 1402 for channel coefficients, a shift register 1404 , a correlator 1406, and arithmetic units for performing operations as indicated in the drawing and explained in the following. Channel correction is performed iteratively by the baseband processing unit 1400 on the perturbed coefficients Din(i) of the perturbed coefficient vector equivalently described ny the following pseudo code:

For i from 0 to n:

$$Dout(i) = (Din(i) - Dcorr(i)) / SF$$

For j from 1 to m:

$$Dcorr(i+j) = Dcorr(i+j) + Dout(i) * G(j)$$

wherein

Din is the uncorrected perturbed coefficient vector with length n
Dout is the channel-corrected coefficient coefficient vector
G is the vector of the channel coefficients with length m+1
SF is the scaling factor
i= 0, 1, 2, ..., n is an index indicating an order of the coefficients Din(i)
j = 1, 2, ...m is an index indicating an order of the channel coefficients G(j).

The iterative deconvolution presented here takes advantage of the fact that a guard section with zero amplitudes has been built into the emitted coefficient vector. As a result, the first non-zero value after the zero distance is scaled by the coefficient encoding the data, but not distorted by overlapping contributions from previous codes. The correct value can be read by comparing the value with the first channel coefficient. Thus the contribution of this code to the following coefficients is also known and can be subtracted. After this step, the following value is also unadulterated by overlapping contributions. Iteratively, the entire vector can be unfolded with a few arithmetic operations.

Described in a matrix view for comparison and visualization of this process, an upper right corner of the channel perturbation matrix was set to zero. The matrix then has a simple stripe diagonal shape. The presented iterative deconvolution is equivalent to a matrix operation using this matrix. However, the hardware implementation proposed based on the iterative process is much simpler and faster than performing such matrix operations.

The procedure has been explained using the example of a symbol with a structure such as s0 in Fig. 3, which combines channel estimation and channel correction in one symbol. Alternatively, a pure data symbol can be iteratively decoded - for channel coefficients that have already been evaluated - if a guard section of zero values is installed. The length of the guard section is at least the number of channel coefficients that are different from zero.

For implementing a dynamic channel estimation, the iterative method can easily provide an estimate of when a new channel estimation is required. After the deconvolution of the data, the cyclic structure of the convolution returns to the free interval with zeros. If values deviating from zero result from the iterative procedure, it is known that the last determined channel estimation has become obsolete and needs to be updated.

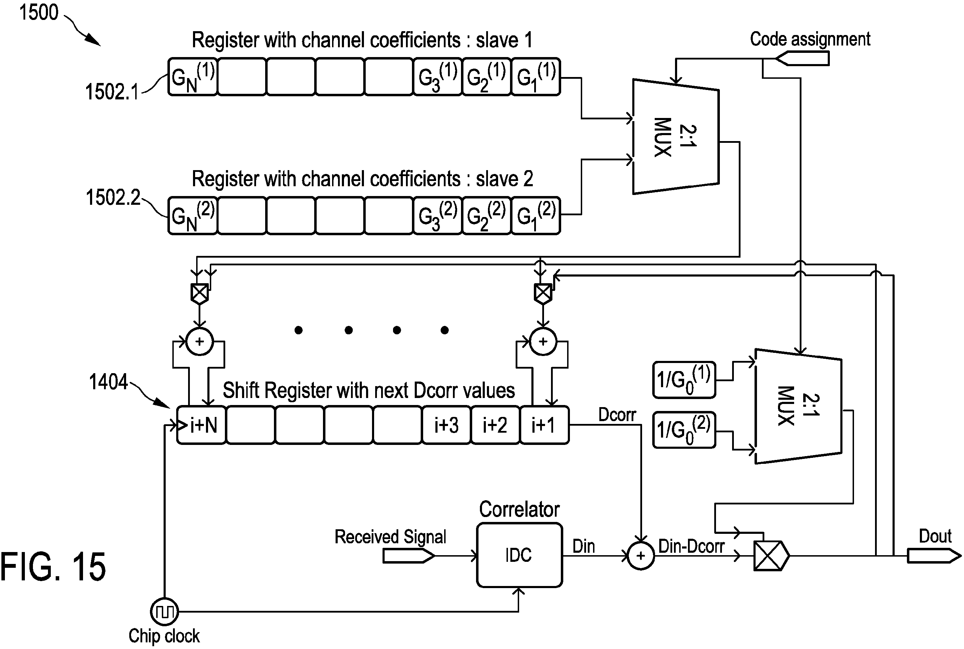

Fig. 15 is a schematic block diagram illustrating a baseband processing unit 1500 for processing uplink radio communication in a radio receiver according to an embodiment of the invention. The baseband processing unit forms a supplement to the hardware for the downlink from Fig. 14, and is shown here for the example of a radio communication system having a master and two slaves. The different sets of channel coefficients are stored in different registers 1502.1 and 1502.2. If the system runs through the codes with the chip clock, another part of the system provides the assignment M(i). Typically, this assignment is defined at the MAC level. The assignment controls several multiplexers which select the relevant channel coefficient set G(M(i)). With a higher number of slaves, the hardware is extended accordingly.

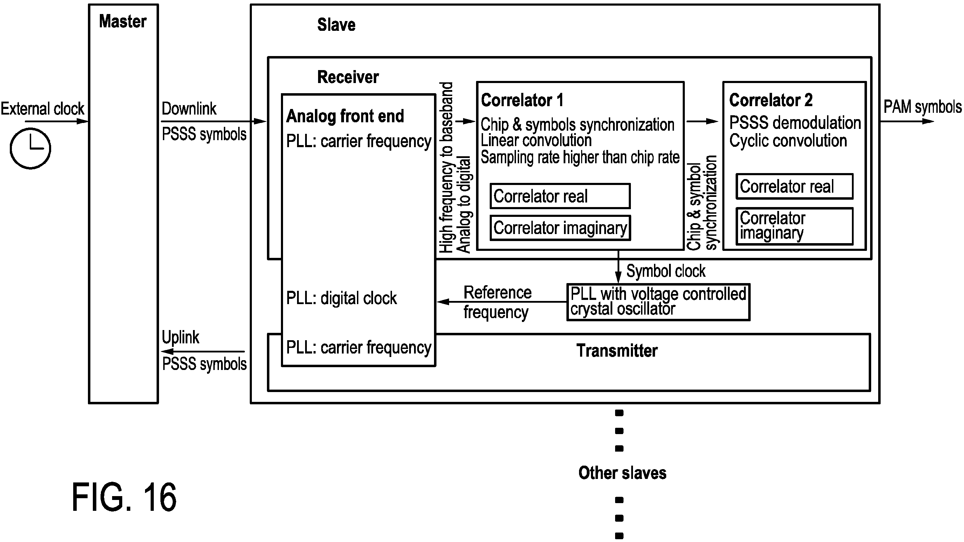

Fig. 16 illustrates parts of a receiver in a slave relevant for carrier synchronization in an exemplary PSSS closed loop system.

The symbol structure sketched in Figure 3 is used for carrier synchronization. To that end, a slave device having a receiver as shown in Figure 5 can be used. The receiver is structured as follows: A symbol clock is measured in correlator 1. A control voltage for a phase-locked loop (PLL) with a voltage-controlled crystal oscillator (VCXO) is derived from the symbol clock. This superordinate PLL generates a reference frequency from which three different frequencies are generated in the Analog Front End (AFE) with three subordinate PLLs:

- a digital clock with which the whole slave is operated.

- a carrier frequency of the receiver of the slave device

- a carrier frequency of the transmitter of the slave device

Unlike the Costas loop, where the difference between transmitter and receiver frequency is preserved, the proposed loop eliminates the cause of the problem by changing the receiver's carrier frequency.
This provides a continuous measurement of the symbol clock sent out by the master node to control the higher-level PLL via the pilot code. Because the symbol clock remains clearly visible even during data transmission, it is possible for a slave that has fallen out of sync to synchronize without interrupting data transmission to the other slave nodes.
In contrast to many PLL applications, there is no need for the PLL to be tuned to a different frequency or quickly locked to the target frequency. After a start-up phase, the closed-loop radio system is operated continuously with unchanged digital clocks. Therefore, a low pass with a low cut-off frequency is used as a loop filter in preferred embodiments. As a result, the PLL regulates only slowly, which compensates for jitter in the control pulses and limits phase noise. This effect may be large enough that the pilot code does not have to be sent out in every symbol. Instead, in one example it is sent out at regular intervals. This measure would increase the useful data rate. In the start-up phase, only the pilot codes are transmitted (without payload data). This allows the system to synchronize reliably before the payload data codes are added.
The synchronization method is not dependent on the used modulation scheme and allows a free choice of modulation.
In the uplink, according to the prior art, the frequency offset had to be corrected by a phase correction at the respective slave. This step can now be omitted by adjusting the carrier frequency of the transmitter.
A system with a preamble could, of course, measure the frequency offset in the preamble and use this value in the data frame to compensate for the effect without further readjustment. Then any modulation scheme could be used in the data frame. However, since we do not have a preamble, the PLL is essential.
The exemplary symbol structure shown in Figure 3 can also be used for chip and symbol synchronization. This has the advantage that no separate preamble is required.

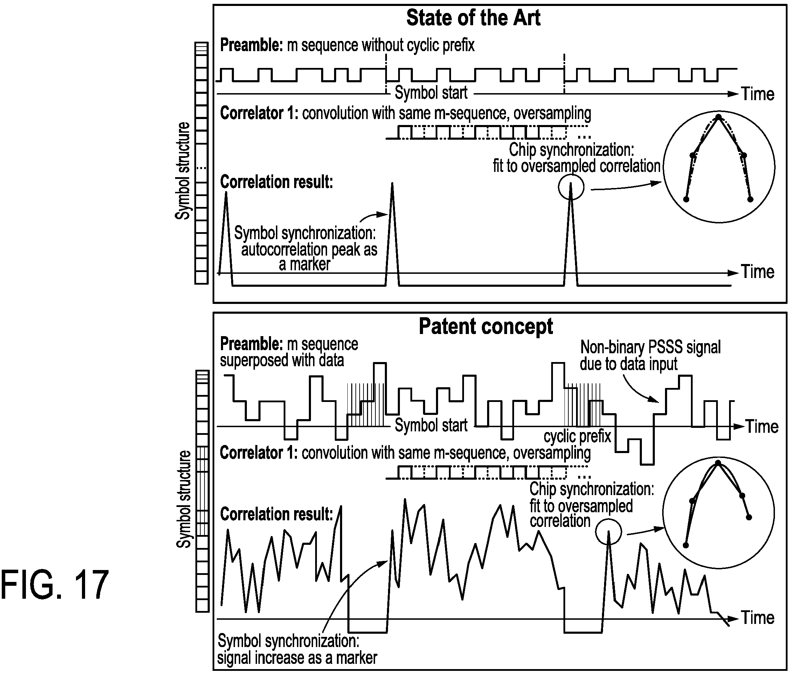

Figure 17 illustrates the differences in the signal after the first correlator in Fig. 16 between the state of the art and the structure proposed as an embodiment in the present specification.
Figure 17 shows in the upper part the signal when according to the prior art m-sequences are sent in a preamble. There are clear peaks at the beginning of the symbols. By a fit around the maximum of the peak the chips can be synchronized. The accuracy of this fit depends on the sampling rate of the first correlator.
Figure 17, in the lower part, additionally shows the signal using the symbol structure of Figure 3. The signal allows identifying the beginning of a symbol by a sudden rise of the signal after several constant chip values. In contrast to state-of-the-art technology, a cyclic prefix is also sent during chip and symbol synchronization - a separate preamble structure is to be avoided. Apart from channel effects, the cyclic prefix (meaningfully the length of the guard interval) and the first symbol, i.e. the pilot code, are decoded correctly. All other data points are distorted by the fact that the following symbol already flows into the autocorrelation. For the data points immediately following the pilot code, however, this influence is very small, so that the peak of the pilot code can still be used for chip synchronization as usual. The ascent to the decoded pilot code is used to recognize the symbol beginnings and thus for symbol synchronization.
Compared to the state of the art, the signal we propose for synchronization is less clear and more distorted in the data points that follow the pilot code. However, it can be assumed that a PSSS signal that is so noisy that it can no longer be synchronized with our method can also no longer be used for normal decoding. Looking at the overall system, there is no disadvantage to the proposed synchronization method.

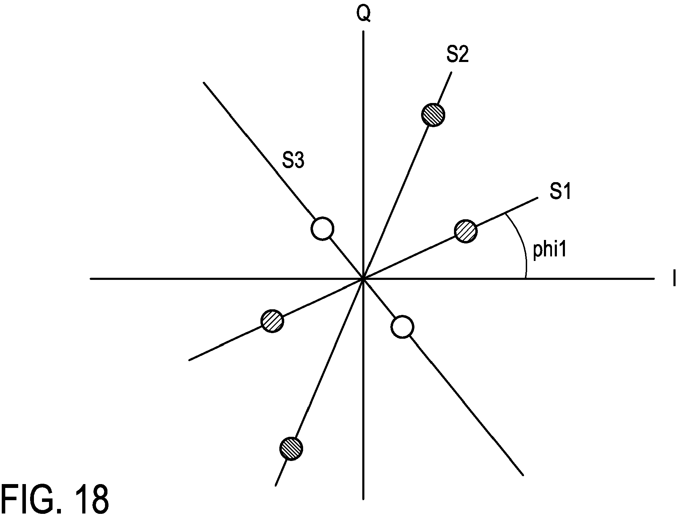

Fig. 18 is an IQ diagram for illustration of an embodiment of a decoding method for decoding payload data.
For decoding the payload data in the downlink, the signal of the master node in the receiver of the slave nodes can be turned into the real axis. Phase offset no longer plays a role. In the uplink, the signals of the slave nodes all arrive at the master node with a different phase offset. This signal cannot simply be rotated into the real axis. Instead, two sepa-rate correlators must be used for the real part (I) and the imaginary part (Q) of the signal to determine the current phase of the respective slave. All data points of a slave lie on a straight line of origin in the IQ diagram (Fig. 18). The phase cannot yet be read unambiguously (but modulo pi) from this line, because the sign of the respective data points is not known. Here the pilot code, which is known to have been sent with a positive sign, helps to resolve the phase ambiguity.
In summary, the use of a particular structure of payload data vectors and resulting PSSS payload data symbols on a radio transmitter side involves including in at least one of the payload data vectors, in addition to the respective fraction of the payload data, a guard section formed by a pilot value embedded between two multiple-repetition sequences of a reference value. This allows a particularly simple method of channel estimation and an equally simple method of channel correction, which do not require use of a preamble for these purposes. A preamble can completely be omitted in certain embodiments providing additional solutions for synchronization making use of the structure of the payload data vectors and the resulting PSSS payload data symbols.

**Claims**

1. A method for operating a radio transmitter in transmitting payload data via a radio channel of a radio communication system, the method comprising:

   - forming payload data vectors of a predetermined length, each including a respective fraction of payload data to be transmitted;
   - including in at least one of the payload data vectors, in addition to the respective fraction of the payload data, a guard section formed by a pilot value embedded between two multiple-repetition sequences of a reference value;
   - encoding the payload data vectors to generate payload data symbols as encoded coefficient vectors, by determining respective products of the respective payload data vectors and a code matrix of mutually orthogonal codewords of a cyclic code, using a Parallel Sequence Spread Spectrum coding scheme, wherein the pilot value is encoded as a pilot code by a predetermined channel-estimation codeword of the cyclic code.

2. The method of claim 1, comprising

   - transmitting the generated payload data symbols via the radio channel; wherein
   - transmitting those payload data symbols, which include the encoded guard section, comprises selectively transmitting the pilot code with a radio power amount that is higher than that used for transmitting the respective fraction of the encoded payload data.

3. The method of claim 1 or 2, comprising

   - transmitting the generated payload data symbols via the radio channel;
   - ascertaining channel-quality information indicative of an error rate of receiving the payload data symbols by a radio receiver;
   - dynamically adapting at least one of the following quantities in dependence on the channel-quality information:

     - a relative frequency of those payload data symbols, which include the encoded guard section;
     - a number of repetitions of the reference value in the multiple-repetition sequences; and
     - an amount of an increase of a radio power to be used for transmitting the pilot code, in comparison with a radio power amount to be used for transmitting the respective fraction of the encoded payload data of a given payload data symbol.

4. The method of claim 1, wherein forming the data vectors for transmission via an uplink radio channel of the radio communication system comprises

   - filling only a transmitter-specific data vector section of the payload data vectors, which is assigned unambiguously in the radio communication system only to the given radio transmitter, with the guard section and with the fraction of payload data that is to be encoded in the respective payload data symbol, and
   - filling any remaining section of the data vectors with the reference value.

5. A method for operating a radio receiver in performing channel estimation for decoding encoded payload data symbols received from a radio transmitter via a radio channel of a radio communication system, the method comprising

   - receiving a plurality of payload data symbols affected by multipath channel perturbation that each encode a respective fraction of payload data as a coefficient vector using a Parallel Sequence Spread Spectrum coding scheme that represent a product of a respective payload data vector of a predetermined length and a code matrix of mutually orthogonal codewords of a cyclic code;
   - decorrelating the received encoded coefficient vectors affected by multipath channel perturbation;
   - detecting in at least one of the decorrelated payload data symbols affected by multipath channel perturbation an encoded guard section having a pilot code embedded between two multiple-repetition sequences of an encoded reference value;
   - decoding at least that fraction of the guard section which follows the pilot code, to determine respective channel coefficients as the respective decoded reference values indicative of a respective amount of multipath channel perturbation as a function of delay time;

- determining a channel estimation kernel as a sequence comprising at least those channel coefficients that differ from the predetermined reference value; and

- providing the determined channel estimation kernel for use in decoding the encoded pay-load data symbols that are affected by multipath channel perturbation.

6. The method of claim 5, further comprising

- performing channel-specific uplink channel estimation for decoding payload data symbols received from a plurality of radio transmitters of the radio communication system via a plurality of uplink radio channels,

- performing for each uplink radio channel a channel-specific uplink channel estimation, applying for each uplink channel the method of claim 5 with respect to only a channel-specific coefficient vector section of the coefficient vectors received via the respective uplink channel, which channel-specific coefficient vector section is assigned unambiguously only to the given radio transmitter using the respective uplink radio channel.

7. The method of claim 6, comprising

- detecting in at least one of the decorrelated payload data symbols received via a given uplink radio channel an encoded channel-specific guard section having a channel-specific pilot code embedded between two multiple-repetition sequences of an encoded reference value;

- decoding at least that fraction of the channel-specific guard section which follows the channel-specific pilot code, to determine respective channel-specific channel coefficients as the respective decoded reference values indicative of a respective channel-specific amount of multipath channel perturbation as a function of delay time;

- determining a channel-specific channel estimation kernel as a sequence comprising at least those channel coefficients that differ from the predetermined reference value; and

- providing the channel-specific determined channel estimation kernel for use in decoding the encoded payload data symbols received via the given uplink radio channel.

8. The method of claim 6, further comprising

- a front end unit of the receiver receiving a radio frequency signal representing the plurality of payload data symbols;

- transforming the received signal into a digital received baseband signal;

- measuring a symbol clock frequency in the digital received baseband signal;

- deriving a control voltage from the measured symbol clock frequency;

- providing the control voltage to a voltage-controlled oscillator that controls a super-ordinate reference phase-locked-loop;

- the voltage-controlled oscillator controlling the super-ordinate reference phase-locked-loop in generating and providing a reference clock signal having a reference clock frequency;

- the front end unit receiving the reference clock signal and deriving from it, using respective sub-ordinate phase locked loops, a digital clock signal for driving operation of the front end unit, and a receiver carrier frequency to be used by the front end unit in reception of the signal.

9. A method for operating a radio receiver in performing channel correction for decoding encoded payload data symbols received from a radio transmitter via a radio channel of a radio communication system, the method comprising:

- performing channel estimation according to the method claim 5;

- obtaining a perturbed coefficient vector of perturbed coefficients Din(i) that represent a product of a respective payload data vector and a code matrix of mutually orthogonal codewords of a cyclic code and that are affected by multipath channel perturbation, by performing decorrelation of a received signal sequence representing the perturbed coefficient vector, wherein $i = 0,1,2,...,m-1$ is an index indicating an order of the coefficients Din(i) and m is a total number of codewords of the cyclic code;

- performing channel correction by sequentially applying the channel correction to the coefficients Din(i) of the perturbed coefficient vector, to obtain a channel-corrected coefficient vector of channel-corrected coefficients Dout(i), by:

- subtracting a respective current multipath correction coefficient Dcorr(i) from a current pertubed coefficient Din(i) of the perturbed coefficient vector, and subsequently applying a predetermined scaling factor to determine a current channel-corrected coefficient Dout(i) of the coefficient vector, wherein Dout(0)= Din(0); and wherein

- the current multipath correction coefficient Dcorr(i) is determined by iteratively, upon each determination of a respective preceding channel-corrected coefficient Dout(i-j), accumulating multipath contributions of the respective preceding channel-corrected coefficient Dout(i-j) to the respective upcoming multipath correction coefficients Dcorr(i-j+p), wherein j = 1, 2,...n is an index indicating an order of the channel coefficients G(j) of the channel estimation kernel G, n is a total number of the channel coefficients G(j) in the channel estimation kernel, and p = 1, 2..., j is a running index;

wherein an order of performing decorrelation and performing channel correction is interchangeable.

10. The method of claim 9, further comprising

- calculating the multipath contributions of the respective preceding current channel-corrected coefficients Dout(i-j) to the respective upcoming multipath correction coefficients Dcorr(i-j+p), by multiplying the respective channel coefficients G(p) with the respective preceding channel-corrected coefficient Dout(i-j).

11. A method for operating a radio receiver in performing channel correction for decoding encoded payload data symbols received from a plurality of radio transmitters via a corresponding plurality uplink radio channels of a radio communication system, the method comprising:

- for each uplink radio channel, performing channel-specific channel correction according to the method of claim 9, applying for each uplink channel the method of claim 8 with respect to only the channel-specific coefficient vector section of the coefficient vectors received via the respective uplink channel, which channel-specific coefficient vector section is assigned unambiguously only to the given radio transmitter using the respective uplink radio channel; wherein
- performing channel estimation is done for each uplink radio channel separately as a channel-specific uplink channel estimation according to the method of claim 6 or 7.

12. A radio transmitter for transmitting payload data via a radio channel of a radio communication system, comprising a transmitter baseband-processing unit, which is configured

- to form payload data vectors of a predetermined length, each including a respective fraction of payload data to be transmitted;
- to include in at least one of the payload data vectors, in addition to the respective fraction of the payload data, a guard section formed by a pilot value embedded between two multiple-repetition sequences of a reference value; and
- to encode the payload data vectors to generate payload data symbols as encoded coefficient vectors, by determining respective products of the respective payload data vectors and a code matrix of mutually orthogonal codewords of a cyclic code, using a Parallel Sequence Spread Spectrum coding scheme, and to enclose the pilot value as a pilot code by a predetermined channel-estimation codeword of the cyclic code.

13. The radio transmitter of claim 12, wherein the baseband processing unit, for forming the data vectors for transmission via an uplink radio channel of the radio communication system, is further configured

- to fill only a transmitter-specific data vector section of the payload data vectors, which is assigned unambiguously in the radio communication system only to the given radio transmitter, with the guard section and with the fraction of payload data that is to be encoded in the respective payload data symbol; and
- to fill any remaining section of the data vectors with the reference value.

14. A radio receiver for receiving payload data via a radio channel of a radio communication system, the radio receiver comprising

- a receiver baseband-processing unit for processing a plurality of payload data symbols from a radio transmitter via a radio channel of a radio communication system, the payload data symbols each encoding a respective fraction of payload data as a coefficient vector encoded using a Parallel Sequence Spread Spectrum coding scheme and representing a product of a respective payload data vector of a predetermined length and a code matrix of mutually orthogonal codewords of a cyclic code; wherein
- the receiver baseband-processing unit comprises a decorrelator, which is configured to decorrelate the received encoded coefficient vectors and to provide decorrelated payload data symbols; and wherein
- the receiver baseband-processing unit is configured to

  - detect in at least one of the decorrelated payload data symbols an encoded guard section having a pilot code embedded between two multiple-repetition sequences of an encoded reference value;
  - decode at least that fraction of the guard section which follows the pilot code, to determine respective channel coefficients as the respective decoded reference values indicative of a respective amount of multipath channel perturbation as a function of delay time;
  - determine a channel estimation kernel as a sequence comprising at least those channel coefficients that differ from the predetermined reference value; and
  - provide the determined channel estimation kernel for use in decoding the encoded payload data symbols.

15. The radio receiver of claim 14, wherein the receiver baseband-processing unit comprises

  - a decorrelator, which is configured to perform decorrelation of a received signal sequence representing the perturbed coefficient vector, to obtain a perturbed coefficient vector of perturbed coefficients $Din(i)$ that represent a product of a respective payload data vector and a code matrix of mutually orthogonal codewords of a cyclic code and that are affected by multipath channel perturbation, wherein $i= 0,1,2,...,m-1$ is an index indicating an order of the coefficients $Din(i)$ and m is a total number of codewords of the cyclic code;
  - a channel correction unit, which is configured

    - to sequentially apply channel correction to the perturbed coefficients $Din(i)$ of the perturbed coefficient vector, so as to obtain a channel-corrected coefficient vector of channel-corrected coefficients $Dout(i)$, by:

      - subtracting a respective current multipath correction coefficient $Dcorr(i)$ from a current pertubed coefficient $Din(i)$ of the perturbed coefficient vector, and subsequently applying a predetermined scaling factor to determine a current channel-corrected coefficient $Dout(i)$ of the coefficient vector, wherein $Dout(0)= Din(0)$; and
      - determining the current multipath correction coefficient $Dcorr(i)$ by iteratively, upon each determination of a respective preceding channel-corrected coefficient $Dout(i-j)$, accumulating multipath contributions of the respective preceding channel-corrected coefficient $Dout(i-j)$ to the respective upcoming multipath correction coefficients $Dcorr(i-j+p)$, wherein $j = 1, 2,...n$ is an index indicating an order of the channel coefficients $G(j)$ of the channel estimation kernel G, n is a total number of the channel coefficients $G(j)$ in the channel estimation kernel, and $p = 1, 2..., j$ is a running index.

16. The radio receiver of claim 14 or 15, wherein the receiver baseband-processing unit, for performing channel correction for decoding encoded payload data symbols received from a plurality of radio transmitters via a corresponding plurality uplink radio channels is configured to

  - perform channel-specific uplink channel estimation for each uplink radio channel by performing channel estimation with respect to only a channel-specific coefficient vector section of the coefficient vectors received via the respective uplink channel, which channel-specific coefficient vector section is assigned unambiguously only to the given radio transmitter using the respective uplink radio channel;
  - perform, separately for each uplink radio channel, channel-specific channel correction, with respect to only the channel-specific coefficient vector section of the coefficient vectors received via the respective uplink channel.

100

S2

S1

S3

M

SN

• • •
• • •

S4

- Prior Art -

FIG. 1

FIG. 2

- Prior Art -

EP 3 675 397 A1

mi: allocated m-sequence
si: payload data vector

# FIG. 3

FIG. 4

Pilot value

Payload data vector (BPSK) as transmitted

FIG. 5

Convolution kernel

Payload data vector as received, after decorrelation

FIG. 6

EP 3 675 397 A1

FIG. 7

EP 3 675 397 A1

FIG. 8

EP 3 675 397 A1

EP 3 675 397 A1

FIG. 9

FIG. 10

FIG. 11

FIG. 12

EP 3 675 397 A1

FIG. 13

FIG. 14

EP 3 675 397 A1

FIG. 15

**Master**

**Slave**

External clock

Downlink
PSSS symbols

**Receiver**

**Analog front end**

PLL: carrier frequency

High frequency to baseband
Analog to digital

**Correlator 1**

Chip & symbols synchronization
Linear convolution
Sampling rate higher than chip rate

Correlator real

Correlator imaginary

Chip & symbol
synchronization

**Correlator 2**

PSSS demodulation
Cyclic convolution

Correlator real

Correlator
imaginary

PAM symbols

Symbol clock

PLL: digital clock

Reference
frequency

PLL with voltage controlled
crystal oscillator

Uplink
PSSS symbols

PLL: carrier frequency

**Transmitter**

**Other slaves**

FIG. 16

EP 3 675 397 A1

**State of the Art**

**Preamble:** m sequence without cyclic prefix

Symbol start

**Correlator 1:** convolution with same m-sequence, oversampling

Chip synchronization: fit to oversampled correlation

**Correlation result:**

Symbol synchronization: autocorrelation peak as a marker

Symbol structure

Time

**Patent concept**

**Preamble:** m sequence superposed with data

Non-binary PSSS signal due to data input

cyclic prefix

Symbol start

**Correlator 1:** convolution with same m-sequence, oversampling

Chip synchronization: fit to oversampled correlation

**Correlation result:**

Symbol synchronization: signal increase as a marker

Symbol structure

Time

**FIG. 17**

FIG. 18

Europäisches
Patentamt

European
Patent Office

Office européen
des brevets

## EUROPEAN SEARCH REPORT

Application Number

EP 19 17 1611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | UNDERBERG LISA ET AL: "ParSec: Wireless industrial communication first PSSS measurements in industrial environment", 2017 IEEE 13TH INTERNATIONAL WORKSHOP ON FACTORY COMMUNICATION SYSTEMS (WFCS), IEEE, 31 May 2017 (2017-05-31), pages 1-8, XP033129104, DOI: 10.1109/WFCS.2017.7991941 [retrieved on 2017-07-25] | 1,5,6,8, 12,14,16 | INV. H04J13/00 H04W52/04 |
| A | * page 3, left-hand column, line 7 - page 5, right-hand column, line 6 * | 2,3,7, 9-11,13, 15 | |
| Y | US 6 097 711 A (OKAWA KOICHI [JP] ET AL) 1 August 2000 (2000-08-01) | 1,5,6,8, 12,14,16 | |
| A | * column 7, line 66 - column 8, line 19; figure 11 * | 2,3,7, 9-11,13, 15 | |
| A | UNDERBERG LISA ET AL: "A PSSS Approach for Wireless Industrial Communication Applying Iterative Symbol Detection", IEEE TRANSACTIONS ON INDUSTRIAL INFORMATICS, IEEE SERVICE CENTER, NEW YORK, NY, US, vol. 14, no. 5, 1 May 2018 (2018-05-01), pages 2108-2119, XP011683097, ISSN: 1551-3203, DOI: 10.1109/TII.2017.2779471 [retrieved on 2018-05-03] * paragraph [VII.ResourceManagementinaPSSSsystem]; figures 2, 3, 10 * | 1-16 | TECHNICAL FIELDS SEARCHED (IPC) H04J H04W |

-/--

The present search report has been drawn up for all claims

| Place of search | Date of completion of the search | Examiner |
|---|---|---|
| Munich | 29 October 2019 | Giglietto, Massimo |

EPO FORM 1503 03.82 (P04C01)

page 1 of 2

Europäisches
Patentamt

European
Patent Office

Office européen
des brevets

**EUROPEAN SEARCH REPORT**

Application Number

EP 19 17 1611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KRAEMER ROLF ET AL: "ParSec: A PSSS approach to industrial radio with very low and very flexible cycle timing", 2016 24TH EUROPEAN SIGNAL PROCESSING CONFERENCE (EUSIPCO), EURASIP, 29 August 2016 (2016-08-29), pages 1222-1226, XP033011131, DOI: 10.1109/EUSIPCO.2016.7760443 [retrieved on 2016-11-28] * paragraph [V.ResourceManagementandDLC/MACsupport] * ----- | 1-16 | |

TECHNICAL FIELDS
SEARCHED      (IPC)

The present search report has been drawn up for all claims

| Place of search | Date of completion of the search | Examiner |
|---|---|---|
| Munich | 29 October 2019 | Giglietto, Massimo |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 19 17 1611

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2019

| Patent document cited in search report | Publication date | Patent family member(s) | Publication date |
|---|---|---|---|
| US 6097711 A | 01-08-2000 | CA 2206380 A1 | 30-11-1997 |
| | | CN 1171676 A | 28-01-1998 |
| | | CN 1351432 A | 29-05-2002 |
| | | CN 1351433 A | 29-05-2002 |
| | | DE 69729605 D1 | 29-07-2004 |
| | | DE 69729605 T2 | 23-06-2005 |
| | | DE 69734611 D1 | 15-12-2005 |
| | | DE 69734611 T2 | 14-06-2006 |
| | | EP 0810742 A2 | 03-12-1997 |
| | | EP 1317077 A2 | 04-06-2003 |
| | | JP H1051354 A | 20-02-1998 |
| | | KR 19980018118 A | 05-06-1998 |
| | | US 6097711 A | 01-08-2000 |
| | | US 2003031195 A1 | 13-02-2003 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016086916 A1